# EUROPÄISCHE PATENTSCHRIFT

(11) **EP 2 188 351 B1**
(45) Veröffentlichungstag und Bekanntmachung des Hinweises auf die Patenterteilung: **23.07.2014**
(21) Anmeldenummer: 08785817.1
(22) Anmeldetag: 04.09.2008
(51) Int. Cl.: C10B 31/04

(54) **FÜLLTELESKOP ZUM BEFÜLLEN VON KOKSÖFEN**
TELESCOPIC CHUTE FOR CHARGING COKE OVENS
TRÉMIE DE CHARGEMENT TÉLESCOPIQUE POUR REMPLISSAGE DE FOURS À COKE

(30) Priorität: 15.09.2007 DE 102007044181
(43) Veröffentlichungstag der Anmeldung: 26.05.2010
(73) Patentinhaber: ThyssenKrupp Industrial Solutions AG, 45143 Essen (DE)
(72) Erfinder: KNOCH, Ralf, 45899 Gelsenkirchen (DE)
(74) Vertreter: Albrecht, Rainer Harald
(86) Internationale Anmeldenummer: PCT/EP2008/007220
(87) Internationale Veröffentlichungsnummer: WO 2009/033600

(56) Entgegenhaltungen:
- EP-A- 0 454 577
- DE-A1- 2 559 390
- PIDUCH H-G ET AL: "INFLUENCE OF LATEST POLLUTION CONTROL ACTS ON DESIGN AND AUTOMATIONOF MODERN COKE-OVEN MACHINES" AISE STEEL TECHNOLOGY, AISE, PITTSBURG, PA, US, Bd. 71, Nr. 10, 1. Oktober 1994 (1994-10-01), Seiten 18-22, XP000469629 ISSN: 0021-1559

## Beschreibung

Die Erfindung betrifft ein Füllteleskop zum Befüllen von Koksöfen mit einem vertikal ausgerichteten Einlauftrichter und einem Teleskopunterteil, das mit Pendelelementen an einer vertikal verstellbaren Hubeinrichtung aufgehängt ist. Ein Füllteleskop mit den beschriebenen Merkmalen ist beispielsweise aus DE 199 64 274 B4 bekannt.

In einem modernen Kokereibetrieb wird die Einsatzkohle mit Hilfe von Füllteleskopen an den Kohlefüllwagen in die Ofenkammern eines Koksofens eingefüllt, Die Füllteleskope sind mehrteilig ausgebildet und weisen in den Teilungsbereichen sowie im Eintauchbereich Dichtungsanordnungen auf, die einen Austritt von Emissionen während des Befüllungsvorganges verhindern sollen.

Ferner sind Füllteleskope bekannt, die Kompensatoren aus Stahl oder Gewebe aufweisen (EP 1 293 552 A). Die Kompensatoren ermöglichen eine Schrägstellung von Teleskopteilen zur Anpassung der Teleskopachse an die Position der Füllöffnung einer Ofenkammer und sichern ferner die Dichtheit des Füllteleskops.

Beim Betrieb der Füllteleskope kommt es zu Schrägstellungen der gegeneinander beweglichen Teile, wenn die Achse des Einlauftrichters und die Achse der Füllöffnung in die Ofenkammer nicht fluchten. Kompensatoren sind dabei erheblichen Beanspruchungen ausgesetzt, zumal Kohlenstoffablagerungen und hohe Temperaturen berücksichtigt werden müssen. Durch Zwängung können bei einer Schrägstellung auf die beweglichen Teile des Füllteleskops erhebliche Kräfte wirken, die im Extremfall eine Verformung ihrer Anschlussbereiche zur Folge haben können. Zu berücksichtigen ist auch, dass Dichtungsringe und Dichtkonen aufgrund der hohen Temperaturen sich schnell verziehen und sich durch einen Verzug die Zuordnung der relativ beweglichen Teile im Betrieb laufend verändert. Bei mehrteilig ausgebildeten Füllteleskopen ohne Kompensatoren, zwischen deren beweglichen Teile Dichtungen vorgesehen sind, kann sich eine Schrägstellung der Teile auch nachteilig auf die Dichtungswirkung auswirken. Die Standzeit der Füllteleskope ist unbefriedigend, Die Füllteleskope müssen nach relativ kurzer Betriebszeit ausgetauscht und repariert werden.

Aus DE 25 59 390 A1 ist ein Füllteleskop zum Befüllen von Koksöfen nach dem Oberbegriff des Anspruches 1 bekannt. Es weist ein Zwischenstück auf, das an Pendelelementen beweglich aufgehängt ist und mit einem seitliche Ausgleichsbewegungen zulassenden Freiraum den Auslassquerschnitt des Einlauftrichters umgibt. Bei der Abdichtung ist ein Faltenbalg vorgesehen, der zwischen einem ringförmigen Flansch des Zwischenstücks und einer im Wesentlichen horizontal ausgerichteten Ringfläche des Einlauftrichters angeordnet ist.

Vor diesem Hintergrund liegt der Erfindung die Aufgabe zugrunde, ein Füllteleskop anzugeben, mit dem ein Achsversatz zwischen der Achse des Einlauftrichters und der Füllöffnung in die Ofenkammer eines Koksofens ausgeglichen werden kann, ohne dass die beweglichen Teile des Füllteleskops hierdurch übermäßig beansprucht werden.

Die Aufgabe wird erfindungsgemäß durch ein Füllteleskop nach Anspruch 1 gelöst. Erfindungsgemäß ist zwischen dem Einlauftrichter und dem Teleskopunterteil ein rohrförmiges Zwischenstück angeordnet, welches an Pendelelementen beweglich aufgehängt ist und mit einem Freiraum, der seitliche Ausgleichsbewegungen zulässt, den Auslassquerschnitt des Einlauftrichters umgibt. Als Pendelelemente sind Pendelstangen, Ketten, Seile und dergleichen einsetzbar. Das Zwischenstück weist einen ringförmigen Flansch auf, der an einer Ringfläche des Einlauftrichters abgedichtet ist. Ferner umschließt das Teleskopunterteil den Mantel des rohrförmigen Zwischenstücks.

Beim Absenken des Teleskopunterteils in die Füllöffnung eines Koksofens, die mit der Achse des Einlauftrichters nicht fluchtet, verschiebt sich das Teleskopunterteil bei der Anpassung an die tatsächliche Lage der Füllöffnung in X- und Y-Richtung nach Maßgabe des Achsversatzes, ohne jedoch eine Schrägstellung einzunehmen. Dies wird durch die pendelnde Aufhängung des Teleskopunterteils an der zugeordneten Hubeinrichtung gewährleistet. Das Teleskopunterteil bleibt vertikal und rechtwinklig zur Ofendecke des Koksofens. Gleichzeitig bewegt das Teleskopunterteil das ebenfalls pendelnd aufgehängte und horizontal frei bewegliche Zwischenstück in X- und Y-Richtung. Auch das Zwischenstück bleibt bei dieser Seitwärtsbewegung ebenfalls vertikal und rechtwinklig zur Ofendecke. Durch die erfindungsgemäße Ausbildung des Füllteleskops kann eine Schrägstellung der Teleskopbauteile vermieden werden. Während des Absenkvorganges in den Fülllochrahmen und Anpassungsvorganges an die tatsächliche Lage der Füllöffnung in der Ofendecke können keine internen Zwangskräfte zwischen den Teilen des Füllteleskops auftreten, da durch die pendelnde Aufhängung sowohl des Teleskopuntertells als auch des Zwischenstückes sämtliche Teile des Follteleskops unter Beibehaltung einer lotrechten Ausrichtung Seitenbewegungen ausführen. Das erfindungsgemäß ausgebildete Zwischenstück erlaubt ferner ausreichend große Stellbewegungen des Teleskopunterteils in vertikaler Richtung. Im Unterschied zu Kompensatoren unterliegt der vertikale Stellweg keinen konstruktiv bedingten Beschränkungen.

Das Teleskopunterteil sowie das Zwischenstück sind jeweils an mindestens drei Pendelelementen, vorzugsweise Pendelstangen, aufgehängt. Bevorzugt ist eine Aufhängung an vier oder mehr Pendelstangen. Die Pendelelemente zur Aufhängung des Zwischenstückes sind zweckmäßig an das obere Ende des Zwischenstückes, vorzugsweise an den Außenumfang des Flansches, angeschlossen. Der ringförmige Flansch des Zwischenstückes sowie die zugeordnete Ringfläche des Einlauftrichters erstrecken sich im Wesentlichen horizontal.

Zwischen dem Flansch des Zwischenstückes und der zugeordneten Ringfläche des Einlauftrichters ist eine Dichtung angeordnet, die als Schlauch oder Membran ausgebildet ist. Das Innere des Dichtungsschlauches oder ein von der Membran abgeschlossener Raum an eine Druckquelle angeschlossen. Bei Arbeitsbewegungen des Füllteleskops ist die Dichtung druckentlastet, so dass der ringförmige Flansch relativ zu der zugeordneten Ringfläche des Einlauftrichters ohne jede Zwängung frei beweglich ist. Nachdem das Füllteleskop auf die Füllöffnung in der Ofendecke abgesenkt worden ist und seine Endposition erreicht hat, wird die Dichtung aktiviert, d.h. mit Druckluft oder einem anderen Druckmedium beaufschlagt. Durch die Druckbeaufschlagung wölbt sich die Dichtung nach außen und presst sich gegen die einander zugeordneten Flächen des Einlauftrichters und des Zwischenstückes, wodurch eine optimale Dichtheit während des Befüllvorganges sichergestellt wird.

Auch das Teleskopunterteil ist mit einer Dichtung gegen den rohrförmigen Mantel des Zwischenstückes abgedichtet, wobei die Dichtung als Schlauch oder Membran ausgebildet und von einer Druckquelle druckbeaufschlagbar ist. Bei einer Abwärts- oder Aufwärtsbewegung des Teleskopunterteils ist die Dichtung druckentlastet. Für den Befüllvorgang wird die Dichtung mit Druckluft oder einem Druckmedium beaufschlagt und dichtet den Spalt zwischen Teleskopunterteil und der Außenseite des Zwischenstückes sicher ab.

Die zuvor beschriebenen Dichtungen sind hitzebeständig ausgeführt und leicht demontierbar eingebaut, Gemäß einer bevorzugten Ausführung der Erfindung sind die Dichtungen in Kammern angeordnet, deren Kammerwände so ausgebildet sein können, dass die Dichtungen vor zu hoher Temperatur und einer übermäßigen Staubbelastung geschützt sind. Die Temperaturbeanspruchung einer zwischen dem Teleskopunterteil und dem Zwischenstück angeordneten Dichtung kann ferner dadurch reduziert werden, dass der von dem Teleskopunterteil umfasste Mantel des Zwischenstückes zumindest über eine Länge, die dem vertikalen Stellweg des Teleskopunterteils entspricht, mit einer Wärmedämmung versehen ist. Vorzugsweise ist der Mantel des Zwischenstückes als wärmegedämmtes, doppelwandiges Bauteil ausgebildet, das einen zylindrischen Außenmantel sowie einen sich zum oberen Ende konisch erweiternden Innenmantel aufweist.

Das Teleskopunterteil weist in an sich bekannter Weise einen zylindrischen Abschnitt sowie einen unterseitig anschließenden Auslaufkonus auf. An dem freien Ende des Auslaufkonus ist erfindungsgemäß ein Dichtungselement zur Abdichtung am Fülllochrahmen eines Koksofens angeordnet. Am oberen Ende des zylindrischen Abschnittes ist ferner eine Dichtungsanordnung zur Anlage an dem Mantel des Zwischenstücks vorgesehen.

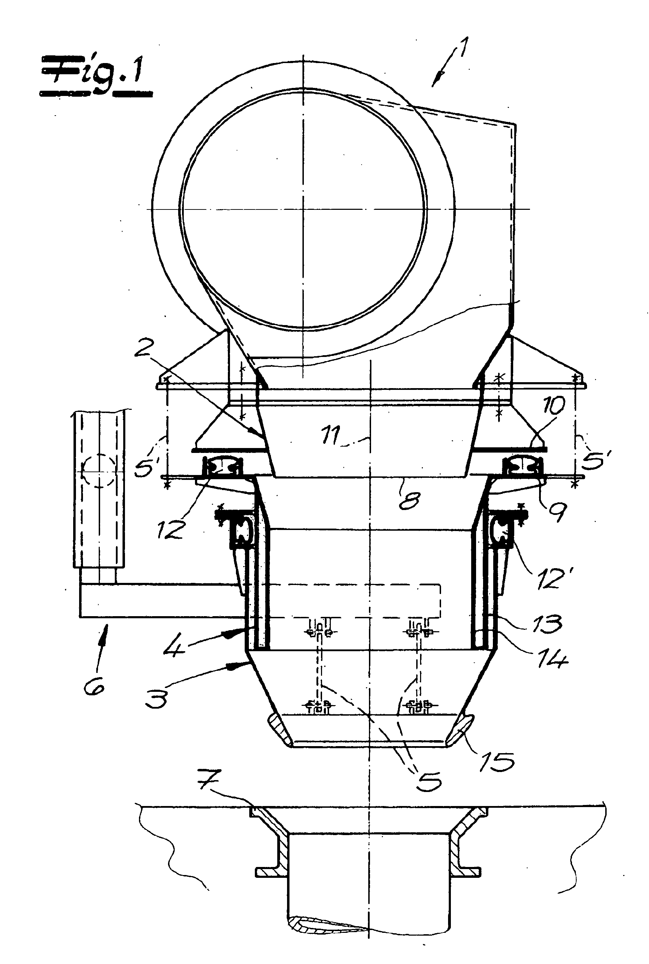

Im Folgenden wird die Erfindung anhand einer lediglich ein Ausführungsbeispiel darstellenden Zeichnung erläutert. Die Figuren 1 bis 3 zeigen jeweils den Längsschnitt durch ein erfindungsgemäßes Füllteleskop in unterschiedlichen Funktionsstellungen.

Das in den Figuren dargestellte Füllteleskop ist an einer Austragseinrichtung 1 an der Unterseite eines nicht dargestellten Kohlefüllwagens befestigt und dient dazu, Einsatzkohle emissionsfrei aus der Austragseinrichtung 1 in die Ofenkammern eines Koksofens überzuleiten. Das Füllteleskop besteht in seinem grundsätzlichen Aufbau aus einem an die Austragseinrichtung 1 angeschlossenen Einlauftrichter 2, einem Teleskopunterteil 3 sowie einem zwischen dem Einlauftrichter 2 und dem Teleskopunterteil 3 angeordneten rohrförmigen Zwischenstück 4. Das Teleskopunterteil 3 ist mit Pendelelementen 5, vorzugsweise Pendelstangen, an einer vertikal verstellbaren Hubeinrichtung 6 aufgehängt und kann mit einer Stellbewegung der Hubeinrichtung 6 auf einen Fülllochrahmen 7 in der Ofendecke des Koksofens abgesenkt werden, Der Fülllochrahmen 7 bildet eine Öffnung in der Ofendecke.

Das rohrförmige Zwischenstück 4 des Füllteleskops ist ebenfalls an Pendelelementen 5', beispielsweise Pendelstangen, beweglich aufgehängt und umgibt mit einem Freiraum, der seitliche Ausgleichsbewegungen zulässt, den Auslassquerschnitt 8 des Einlauftrichters 2. Das Zwischenstück 4 weist einen ringförmigen Flansch 9 auf, der gegen eine Ringfläche 10 des Einlauftrichters abgedichtet ist. Der ringförmige Flansch 9 sowie die zugeordnete Ringfläche 10 des Einlauftrichters erstrecken sich im Wesentlichen horizontal. Die Pendelelemente 5' zur Aufhängung des Zwischenstückes 4 sind an das obere Ende des Zwischenstückes, im Ausführungsbeispiel an den Außenumfang des Flansches 9, angeschlossen. Das pendelnd aufgehängte Teleskopunterteil 3 umschließt den Mantel des rohrförmigen Zwischenstücks 4 und ist gegenüber dem Mantel ebenfalls abgedichtet.

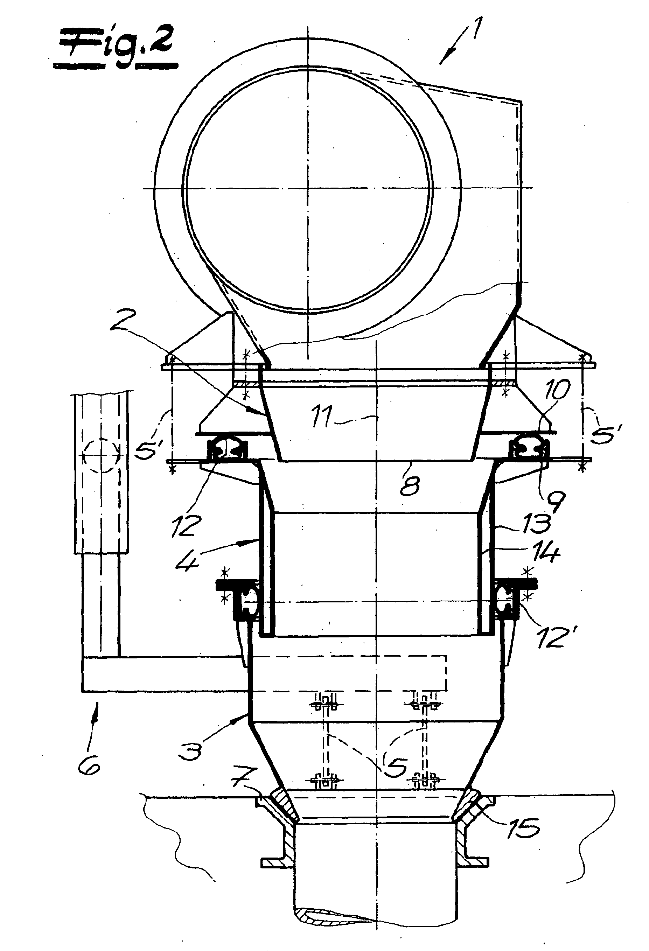

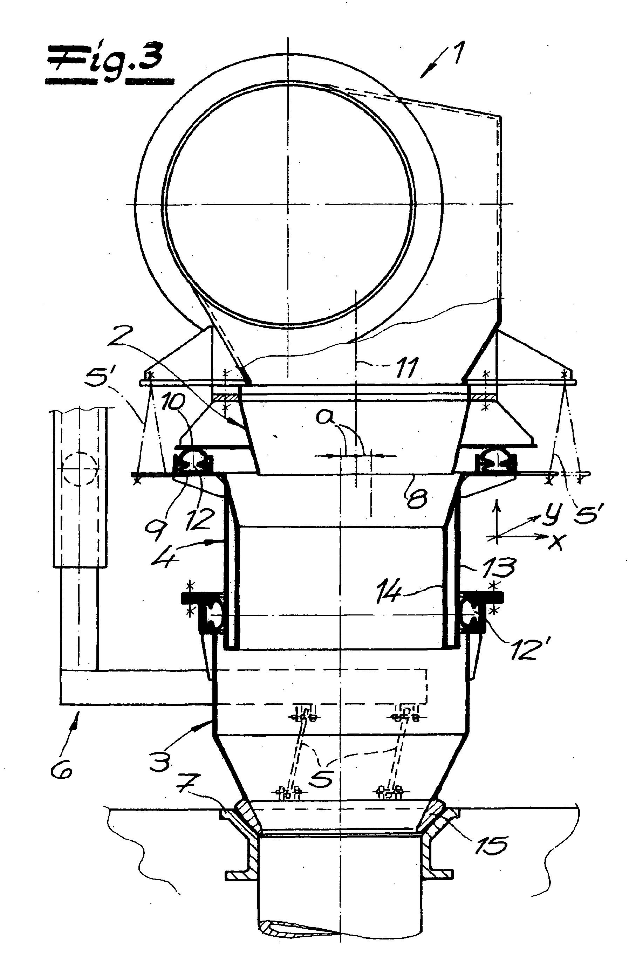

Die Arbeitsweise des Füllteleskops wird aus einer vergleichenden Betrachtung der Fig. 1 bis 3 deutlich. Die Fig. 1 zeigt das Füllteleskop im angehobenen Ruhezustand. Zur Befüllung einer Ofenkammer wird das Teleskopunterteil 3 in die in Fig. 2 dargestellte Position abgesenkt. Während bei dem in Fig. 2 dargestellten Betriebszustand die Füllöffnung in der Ofendecke mit der Achse 11 des Einlauftrichters 2 fluchtet, zeigt die Fig. 3 den Betriebszustand, wenn zwischen der Achse 11 des Einlauftrichters und der Füllöffnung ein seitlicher Versatz a in X- und/oder Y-Richtung vorhanden ist. Aus einer vergleichenden Betrachtung der Fig. 2 und 3 wird deutlich, dass alle beweglichen Teile 3, 4 des Füllteleskops auch dann noch lotrecht ausgerichtet sind, wenn zwischen der Achse 11 des Einlauftrichters und der Achse der Füllöffnung ein seitlicher Versatz a in X- und/oder Y-Richtung vorhanden ist. Beim Absenken des Teleskopunterteils 3 in den Fülllochrahmen 7 verschiebt sich das Teleskopunterteil 3 bei der Anpassung an die tatsächliche Lage des Fülllochrahmens 7 nach Maßgabe des Versatzes a in X- und/oder Y-Richtung, ohne eine Schrägstellung einzunehmen. Dies wird durch die bewegliche Aufhängung an Pendelelementen 5 sicher vermieden. Das Teleskopunterteil 3 bleibt vertikal und rechtwinklig zur Ofendecke. Gleichzeitig bewegt das Teleskopunterteil 3 das ebenfalls pendelnd aufgehängte und horizontal freibewegliche Zwischenstück 4 seitwärts in X- bzw. Y-Richtung. Das Zwischenstück 4 bleibt aufgrund seiner pendelnden Aufhängung bei dieser Seitwärtsbewegung ebenfalls vertikal und rechtwinklig zur Ofendecke. Die erfindungsgemäße Anordnung vermeidet sicher Schrägstellungen der Teleskopbauteile 3, 4 und verhindert Zwängungen im Füllteleskop während des Absenkvorganges in den Fülllochrahmen und seitlichen Anpassungen an die tatsächliche Lage des Fülllochrahmens 7.

Zwischen den beweglichen Teilen 3, 4 des Füllteleskops sind Dichtungen 12 angeordnet. Eine erste Dichtung 12 befindet sich zwischen dem Flansch 9 des Zwischenstückes und der zugeordneten Ringfläche 10 des Einlauftrichters. Ferner ist das Teleskopunterteil 3 mit einer Dichtung 12 gegen den rohrförmigen Mantel des Zwischenstücks 4 abgedichtet. Die Dichtungen 12, 12' sind als Schläuche oder Membranen ausgebildet, wobei das Innere des Schlauches bzw. ein von der Membran abgeschlossener Raum an eine nicht dargestellte Druckquelle angeschlossen sind. Durch Druckbeaufschlagung mit Druckluft oder einem anderen Druckmedium werden die Dichtungen 12, 12' aktiviert und wölben sich nach außen, wobei sie den Spalt zwischen den abzudichtenden Flächen überbrücken. Dieser Zustand ist in den Fig. 2 und 3 dargestellt. Wenn das Füllteleskop eingefahren oder abgesenkt werden soll, werden die Dichtungen 12, 12' deaktiviert, d.h, druckentlastet. Dieser Zustand ist in Fig. 1 dargestellt. Die Fig. 1 zeigt, dass die Dichtungen 12, 12' nicht an der jeweils abzudichtenden Fläche anliegen, so dass sich die Teleskopteile 3, 4 bei ihren Arbeitsbewegungen vollkommen frei gegeneinander bewegen können, so dass weder interne Verspannungs- und Zwangskräfte auftreten können, noch die Dichtungen durch die Bewegungen der Teile einem Verschleiß unterliegen.

Die Dichtungen 12, 12' sind in Kammern angeordnet, die nicht nur eine ordnungsgemäße Positionierung der Dichtungen sicherstellen, sondern die Dichtungen auch vor einer übermäßigen Staubbelastung oder Hitzeeinwirkung schützen.

Der Mantel des Zwischenstücks 4 ist als wärmegedämmtes doppelwandiges Bauteil ausgebildet, das einen zylindrischen Außenmantel 13 sowie einen sich zum oberen Ende konische erweiternden Innenmantel 14 aufweist. Infolge der Isolierwirkung des doppelwandigen Bauteils wird die Temperaturbelastung auf die Dichtung 12' des Teleskopunterteils 3 erheblich reduziert.

Das Teleskopunterteil 3 weist einen zylindrischen Abschnitt sowie einen unterseitig anschließenden Auslaufkonus auf. An dem freien Ende des Auslaufikonus ist ein Dichtungselement 15 zur Abdichtung am Fülllochrahmen angeordnet. Am oberen Ende des zylindrischen Abschnittes befindet sich die Dichtungsanordnung mit der beschriebenen Dichtung 12 zur Anlage an dem Mantel des Zwischenstückes 4.

Das erfindungsgemäße Füllteleskop zeichnet sich aufgrund seiner Bauweise durch eine hohe Betriebssicherheit aus und ermöglicht es, große Lageabweichungen zwischen der Achse 11 des Einlauftrichters 2 und der Füllöffnung in der Ofendecke des Koksofens zu kompensieren. Wartungs- und Reinigungsarbeiten können bei der erfindungsgemäßen Anordnung auf ein Minimum beschränkt werden.

## Patentansprüche

1. Füllteleskop zum Befüllen von Koksöfen, mit einem vertikal ausgerichteten Einlauftrichter (2), einem Teleskopunterteil (3), das mit Pendelelementen (5) an einer verstellbaren Hubeinrichtung (6) aufgehängt ist, und einem zwischen dem Einlauftrichter (2) und dem Teleskopunterteil (3) angeordneten rohrförmigen Zwischenstück (4), das an Pendelelementen (5') beweglich aufgehängt ist und mit einem seitliche Ausgleichsbewegungen zulassenden Freiraum den Auslassquerschnitt (8) des Einlauftrichters (2) umgibt, wobei das Zwischenstück (4) einen ringförmigen Flansch (9) aufweist, der sich im Wesentlichen horizontal erstreckt und an einer im Wesentlichen horizontal ausgerichteten Ringfläche (10) des Einlauftrichters (4) abgedichtet ist, und wobei das Teleskopunterteil (3) den Mantel des rohrförmigen Zwischenstücks (4) umschließt, **dadurch gekennzeichnet, dass** zwischen dem ringförmigen Flansch (9) des Zwischenstücks (4) und der Ringfläche (10) des Einlauftrichters eine als Schlauch oder Membran ausgebildete Dichtung (12) angeordnet ist, wobei das Innere des Schlauches oder ein von der Membran abgeschlossener Raum an eine Druckquelle angeschlossen ist, und dass das Teleskopunterteil (3) mit einer Dichtung (12') gegen den rohrförmigen Mantel des Zwischenstücks (4) abgedichtet ist, wobei diese Dichtung als Schlauch oder Membran ausgebildet ist, die von einer Druckquelle beaufschlagbar und bei einer Abwärts- oder Aufwärtsbewegung des Teleskopunterteils (3) druckentlastet ist.

2. Füllteleskop nach Anspruch 1, **dadurch gekennzeichnet, dass** die Pendelelemente (5') zur Aufhängung des Zwischenstücks (4) an das obere Ende des Zwischenstücks, vorzugsweise an den Außenumfang des Flansches (9), angeschlossen sind.

3. Füllteleskop nach Anspruch 1 oder 2, **dadurch gekennzeichnet, dass** die Dichtungen (12, 12') in Kammern angeordnet sind.

4. Füllteleskop nach einem der Ansprüche 1 bis 3, **dadurch gekennzeichnet, dass** der von dem Teleskopunterteil (3) umfasste Mantel des Zwischenstücks (4) zylindrisch ausgebildet ist um zumindest über eine Länge, die dem vertikalen Stellweg des Teleskopunterteils (3) entspricht, mit einer Wärmedämmung versehen ist.

5. Füllteleskop nach Anspruch 4, **dadurch gekennzeichnet, dass** der Mantel des Zwischenstücks (4) als wärmegedämmtes doppelwandiges Bauteil ausgebildet ist, das einen zylindrischen Außenmantel (13) sowie einen sich zum oberen Ende konisch erweiternden Innenmantel (14) aufweist.

6. Füllteleskop nach einem der Ansprüche 1 bis 5, **dadurch gekennzeichnet, dass** das Teleskopunterteil (3) einen zylindrischen Abschnitt sowie einen unterseitig anschließenden Auslaufkonus aufweist, wobei an dem freien Enden des Auslaufkonus ein Dichtungselement (15) zur Abdichtung am Fülllochrahmen eines Koksofens angeordnet ist und wobei am oberen Ende des zylindrischen Abschnitts eine Dichtungsanordnung zur Anlage an den Mantel des Zwischenstücks (4) vorgesehen ist.

## Claims

1. A charging telescope for charging coke ovens, with a vertically orientated intake funnel (2), a telescopic lower part (3), which is suspended by pendulum elements (5) on an adjustable lifting device (6), and a tubular intermediate piece (4) disposed between the intake funnel (2) and the telescopic lower part (3), which intermediate piece is suspended in a mobile manner on pendulum elements (5') and surrounds the outlet cross-section (8) of the intake funnel (2) with a free space permitting lateral compensatory movements, wherein the intermediate piece (4) comprises an annular flange (9) which extends essentially horizontally and is sealed against an essentially horizontally orientated annular face (10) of the intake funnel (4), and wherein the telescopic lower part (3) surrounds the lateral surface of the tubular intermediate piece (4), **characterised in that** a seal (12) constituted as a flexible tube or membrane is disposed between the annular flange (9) of the intermediate piece (4) and the annular face (10) of the intake funnel, wherein the interior of the flexible tube or a space closed off by the membrane is connected to a pressure source, and that the telescopic lower part (3) is sealed with a seal (12') against the tubular lateral surface of the intermediate piece (4), wherein this seal is constituted as a flexible tube or membrane which can be acted upon by a pressure source and is relieved of pressure when there is a downward or upward movement of the telescopic lower part (3).

2. The charging telescope according to claim 1, **characterised in that** the pendulum elements (5') are connected to the upper end of the intermediate piece, preferably to the outer circumference of the flange (9), for the suspension of the intermediate piece (4).

3. The charging telescope according to claim 1 or 2, **characterised in that** the seals (12, 12') are disposed in chambers.

4. The charging telescope according to any one of claims 1 to 3, **characterised in that** the lateral surface of the intermediate piece (4) surrounded by the telescopic lower part (3) is constituted cylindrical and is provided with double insulation at least over a length corresponding to the vertical adjustment path of the telescopic lower part (3).

5. The charging telescope according to claim 4, **characterised in that** the lateral surface of the intermediate piece (4) is constituted as a thermally insulated double-walled component, which comprises a cylindrical outer lateral surface (13) and an inner lateral surface (14) widening conically towards the upper end.

6. The charging telescope according to any one of claims 1 to 5, **characterised in that** the telescopic lower part (3) comprises a cylindrical section and a discharge cone adjacent thereto at the underside, wherein a sealing element (15) for the seal at the charging hole frame of a coke oven is disposed at the free end of the discharge cone and wherein a sealing arrangement for seating against the lateral surface of the intermediate piece (4) is provided at the upper end of the cylindrical section.

## Revendications

1. Télescope de remplissage pour remplir des fours à coke avec une trémie d'entrée (2) orientée verticalement, une partie inférieure télescopique (3), qui est suspendue avec des éléments pendulaires (5) à un dispositif de levage (6) réglable et une pièce intermédiaire (4) de forme tubulaire disposée entre la trémie d'entrée (2) et la partie inférieure télescopique (3) qui est suspendue mobile aux éléments pendulaires (5') et entoure la section de sortie (8) de la trémie d'entrée (2) avec un espace libre permettant des mouvements de compensation latéraux, la pièce intermédiaire (4) comportant une bride (9) de forme annulaire qui s'étend pour l'essentiel de façon horizontale et est bouchée sur une surface annulaire (10) de la trémie d'entrée (4) orientée pour l'essentiel de façon horizontale et la partie inférieure télescopique (3) enveloppant le gainage de la pièce intermédiaire (4) de forme tubulaire **caractérisé en ce qu'**entre la bride (9) de forme annulaire de la pièce intermédiaire (4) et la surface annulaire (10) de la trémie d'entrée est disposé un joint d'étanchéité (12) constitué comme un flexible ou une membrane, l'intérieur du flexible ou un espace fermé par la membrane étant raccordé à une source de pression et **en ce que** la partie inférieure télescopique (3) est étanchéifiée avec un joint d'étanchéité (12') contre le gainage de forme tubulaire de la pièce intermédiaire (4), ce joint d'étanchéité étant constitué comme un flexible ou une membrane qui peut être sollicité par une source de pression et décompressé par un mouvement descendant ou ascendant de la partie inférieure télescopique (3).

2. Télescope de remplissage selon la revendication 1 **caractérisé en ce que** les éléments pendulaires (5') sont raccordés pour suspension de la pièce intermédiaire (4) à l'extrémité supérieure de la pièce intermédiaire, de préférence à la périphérie extérieure de la bride (9).

3. Télescope de remplissage selon la revendication 1 ou 2 **caractérisé en ce que** les joints d'étanchéité (12, 12') sont disposés dans des chambres

4. Télescope de remplissage selon une quelconque des revendications 1 à 3 **caractérisé en ce que** le gainage de la pièce intermédiaire (4) entouré par la partie inférieure télescopique (3) est constitué de façon cylindrique et est muni d'une isolation thermique au moins sur une longueur qui correspond au parcours de réglage vertical de la partie inférieure télescopique (3).

5. Télescope selon la revendication 4 **caractérisé en ce que** le gainage de la pièce intermédiaire (4) est constitué comme un élément à double paroi à isolation thermique qui comporte un gainage extérieure (13) cylindrique ainsi qu'un gainage intérieur (14) s'élargissant de façon conique vers l'extrémité supérieure.

6. Télescope de remplissage selon une quelconque des revendications 1 à 5 **caractérisé en ce que** la partie inférieure télescopique (3) comporte un tronçon cylindrique ainsi qu'un cône d'écoulement se raccordant par en dessous, un élément d'étanchéité (15) étant disposé sur l'extrémité libre du cône d'écoulement pour étanchéification sur le cadre du trou de remplissage d'un four à coke et un système d'étanchéité étant prévu sur l'extrémité supérieure du tronçon cylindrique pour installation sur le gainage de la pièce intermédiaire (4).
